# EUROPEAN PATENT SPECIFICATION

(11) **EP 1 500 593 B1**
(45) Date of publication and mention of the grant of the patent: **20.12.2006**
(21) Application number: 04254445.2
(22) Date of filing: 22.07.2004
(51) Int. Cl.: B65B 25/22, B65B 7/28, B65D 77/20, B65B 25/00, B65D 79/00

(54) **Method for manufacturing food in container and container**
Verfahren zur Herstellung eines Nahrungsmittels in einem Behälter, und Behälter
Procédé de fabrication d'un produit alimentaire dans un récipient et récipient

(30) Priority: 24.07.2003 JP 2003279484
(43) Date of publication of application: 26.01.2005
(73) Proprietor: Shikoku Kakoki Co., Ltd., Itano-gun, Tokushima-ken 771-0202 (JP)
(72) Inventor: Takahashi, Sanae, c/o Shikoku Kakoki Co., Ltd., Shibuya-ku Tokyo 150-0001 (JP)
(74) Representative: Illingworth-Law, William Illingworth

(56) References cited:
- EP-A- 0 521 642
- WO-A-01/19683
- DE-U1- 7 638 374
- GB-A- 2 251 540

## Description

### Technical Field

The present invention relates to a method for manufacturing a food in a container and to a container for use in such method.

### Background Art

Conventionally, desserts put in containers made from plastic are manufactured and sold. These desserts may be put in a type of container sealed with a flat film, however, due to the high-class-inclination in recent years, they are often sold in a type of container closed with a dome-shaped fitted lid (See Japanese Design Publication No. 1135720, for example).

GB 2251540 describes a process for preserving a food product which includes introducing the food product into a tray having side walls stepped to form a first support surface extending round the tray. The side walls also provide a second support surface extending round the tray, the first support surface is nearer to the base of the tray than the second support surface. A microporous inner lid is affixed to the first support surface, the food product is heated in the tray and then allowed to cool, and the tray is sealed by affixing an outer lid to the second support surface.

### Disclosure of the Invention

However, desserts which are put in a type of container such as mentioned above closed with a dome-shaped fitted lid, had problems due to the use of the fitted lid that a storage period of contents was short, and also that a lid members fell away when containers contacted with each other during transportation. Moreover, since a plastic container is sensitive to heat, there was a problem that its contents could not be heated together with the container.

The present invention has been made in view of such circumstances and it is an object of the present invention to provide a method for manufacturing a food in a container with a high-class impression wherein contents can be heated and cooked together with the container body, that falling of the lid member can be prevented, and also the storage period can be prolonged; and a food in a container manufactured by such method.

The inventor of the present invention thought that it was preferable to manufacture baked confectioneries represented by a baked cake and the like among the above-mentioned desserts, by heating and cooling together with the container body (the container without the lid member) filled with foodstuff, and that it was preferable to use a sealed container with a high-class impression as a container. Based on this idea, the inventor of the present invention used an aluminum container body and triedtoheat-sealadome-shapedlidmemberthereto. As a result, the present inventor have found that the afore-mentioned requirements could be satisfied by using a food container comprised of an aluminum container body wherein the inner surface is coated with a heat-resistant resin whose component does not elute when the inside is heated; and a dome-shaped lid member for sealing made from a thermoplastic resin. The present invention has been thus completed.

Aspects of the invention are defined in the accompanying claims.

According to an aspect of the invention, there is provided a method for manufacturing a food in a container using a food container comprised of: an aluminum container body wherein the inner surface is coated with a heat-resistant resin; and a dome-shaped lid member for sealing made from a thermoplastic resin to close the container body, wherein a method for manufacturing a food in a container comprises the following steps: a filling step to fill foodstuff in the container body; a heating step to heat a filled foodstuff together with the container body; a sealing step to heat-seal the lid member for sealing to the container body after being heated; and a cooling step to cool the sealed container. The lid member for sealing of the food container can have a portion adapted to form a concave portion which can form a concave portion. The portion adapted to form a concave portion can be a convex portion. The portion adapted to form a concave portion can be placed in the center part of the lid member for sealing. The method for manufacturing can include a pressing step to form a concave portion by pressing the portion adapted to form a concave portion after the sealing step. The sealing step can include a preheating step and a complete sealing step.

According to another aspect of the invention, there can be provided a food container for use with the method described above. The container includes an aluminium container body having an inner surface which is coated with a heat-resistant resin. The food container also includes a dome-shaped lid member for sealing the food container. The lid member comprises a thermoplastic resin.

The claimed method and container for manufacturing a food provides for a high-class impression wherein the contents of the container can be heated and cooked together with the container body. Falling off of the lid member can also be prevented, and also the storage period can be prolonged.

### Brief Description of Drawings

Fig. 1 is a perspective view of a food in a container of one embodiment of the present invention.
Fig. 2 is a longitudinal sectional view of a food in a container shown in Fig. 1.
Fig. 3 is a longitudinal sectional view showing a state when a portion adapted to form a concave portion of a food in a container shown in Fig. 1 has formed a concave portion.

### Explanation of letters or numerals

- 10.: food container
- 12.: baked confectionery
- 14.: container body
- 16.: lid member for sealing
- 18. 24.: flange portion
- 20.: edge portion
- 22.: convex portion
- 23.: concave portion
- 26. 34.: bellows portion
- 28.: projecting member
- 30.: tab
- 32.: nonslip means

### Best Mode of Carrying Out the Invention

As for a method for manufacturing a food in container of the present invention, it is not particularly limited as long as it is a method using a food container comprised of an aluminum container body wherein the inner surface is coated with a heat-resistant resin, and a dome-shaped lid member for sealing made from a thermoplastic resin to close the container body; and comprising the following steps: a filling step to fill foodstuff in the container body; a heating step to heat filled foodstuff together with the container body; a sealing step to heat-seal the lid member for sealing to the container body after being heated; and a cooling step to cool the sealed container. The method can also comprise a foodstuff-cooling step between the above-mentioned heating step and the sealing step to cool a hot foodstuff close to room temperature by taking away the rough heat. In this case, the cooling step after the sealing step becomes a step to cool foodstuff from room temperature to refrigeration temperature. According to the method for manufacturing a food in a container of the present invention, contents can be heated and cooked together with the container body and the manufacturing of a food in a container can be carried out effectively. Moreover, the manufactured food in a container has a high-class impression, falling of the lid member is prevented and prolongation of the storage period can be realized.

As for a food to be manufactured, it is not particularly limited as long as it is manufactured by cooling after heating. It can be in a solid form or in a gel form, and baked confectioneries such as baked cake and baked pudding, gratin, pizza, doria (rice gratin) and the like can be exemplified.

First of all, a food container used for the method for manufacturing a food in a container of the present invention is explained.

As for a container body of a food container, it is not particularly limited as long as it is an aluminum container body which can contain food inside, wherein the inner surface is coated with a heat-resistant resin. Aluminum includes aluminum alloy besides aluminum itself, and a heat-resistant resin relates to a resin whose component does not elute during the heating step of the method for manufacturing a food in a container, for example, a resin described in Japanese Laid-Open Utility Model Application No. 1993-7660 or the like can be exemplified.

As for a lid member for sealing of a food container, it is not particularly limited as long as it is a dome-shaped lid member to close the container body made from a thermoplastic resin. As for a thermoplastic resin, it is preferable to use a polystyrene-based resin or a polyethylene-based resin. As for a dome shape, a flat shape is excluded and it is related to a shape having a bulge. It is preferable that this lid member for sealing has a portion adapted to form a concave portion which can form a concave portion, for example, a portion adapted to form a concave portion which has a flexibility compared to other portions (easy to modify) can be named. By providing the portion adapted to form a concave portion, the shape of the lid can be maintained without the lid member being deformed when food is heated together with the container body, then sealed and cooled, and a more secure and stable sealing can be obtained. That is, in case the portion adapted to form a concave portion is not provided, when it is sealed when the food and the container body are heated, inflated air inside the container after sealing is compressed by being cooled and sucks the lid member to the inside of the container. As a result, the lid member may be deformed depending on the material and the like of the lidmember. However, this problem can be avoided by providing the portion adapted to form a concave portion. As for such portion adapted to form a concave portion of the lid member for sealing, it is not particularly limited as long as the concave portion is formed naturally or artificially by temperature change and the like and it may be a flat portion or a convex portion under normal conditions. However, a convex portion is preferable because the manufacturing of the lid member as well as the formation of the concave portion is easy. As for a place to provide the portion adapted to form a concave portion, it is not particularly limited, however, it is preferable to provide it in the center portion of the lid member (center of gravity portion) because the load placed on the seal portion will be equalized, and peeling of a part of the seal can be more certainly prevented.

Each step in the method for manufacturing a food in a container of the present invention using a food container such as mentioned above will be explained in detail.

As for the filling step, it is not particularly limited as long as it can fill foodstuff in the container body, and conventional foodstuff-filling method can be adopted.

As for the heating step, it is not particularly limited as long as it is a step to heat foodstuff filled during the filling step together with the container body. For example, heating relates to bake food itself or to scorch, and as for a heating temperature, though it is not particularly limited, it is, for example, around 200-300°C.

As for a sealing step, it is not particularly limited as long as it is a step to heat-seal the lid member for sealing to the container body after being heated. In such sealing step, it is preferable to comprise a preheating step and a complete sealing step. Although it depends on a shape or a material of the container body and the lid member, it is preferable to seal by heating, for example, at 150-175°C for 0.5-2.0 seconds in the preheating step, and at 155-180°C for 0.5-2.0 seconds in the complete sealing step. By employing a two-stage heating in this way, a firmer adhesion can be realized. Moreover, it is preferable to secure a heat effectively by providing a heat-insulating material on the back of the surface to be heat-sealed of the container body, thus a heating device on the anvil side (container cradle) can be omitted. Furthermore, the heat-sealing during the sealing step can be carried out as promptly as possible after the heating step, and the heat-sealing can be consequently carried out by using the heat of the heating step effectively.

As for a cooling step, it is not particularly limited as long as it can cool the sealed container. Cooling herein mentioned includes natural cooling, refrigeration or freezing. In this cooling step, air inside of the container inflated during the heating step compresses, the lid member is deformed, and consequently the adhesion part may peel off. However, in case the lid member for sealing of the food container has a portion adapted to form a concave portion, the portion is deformed (forms a concave portion), and deformation of the container as well as peeling of the adhesion portion can be prevented. Furthermore, a pressing step to form the concave portion beforehand can be included after the sealing step. As for such pressing step, it is not particularly limited as long as it is a step to form a concave portion by pressing the portion adapted to form a concave portion, and, for example, pressing can be carried out with using a bar-shaped member. By comprising the pressing step, a concave portion can be surely formed, and the portion adapted to forma concave portion becomes easy to design. Meanwhile, "after the sealing step" means immediately after sealing and an incipient stage of cooling.

As for a food in a container, it is not particularly limited as long as it is a food in a container manufactured by the above-mentioned method for manufacturing. For example, foods in a container manufactured by the following steps: filling foodstuff in the aluminum container body wherein the inner surface is coated with a heat-resistant resin; heating the filled foodstuff together with the container body; then sealing by heat-sealing to the container body a dome-shaped lid member for sealing made from thermoplastic resin having a portion adapted to form a concave portion which can form a concave portion; forming a concave portion on the lid member for sealing by pressing the portion adapted to form a concave portion; and by cooling can be exemplified. Foods in a container are manufactured effectively as contents are heated and cooked together with the container body. Furthermore, foods in a container has a high-class impression, falling of the lid member is prevented and prolongation of the storage period can be realized.

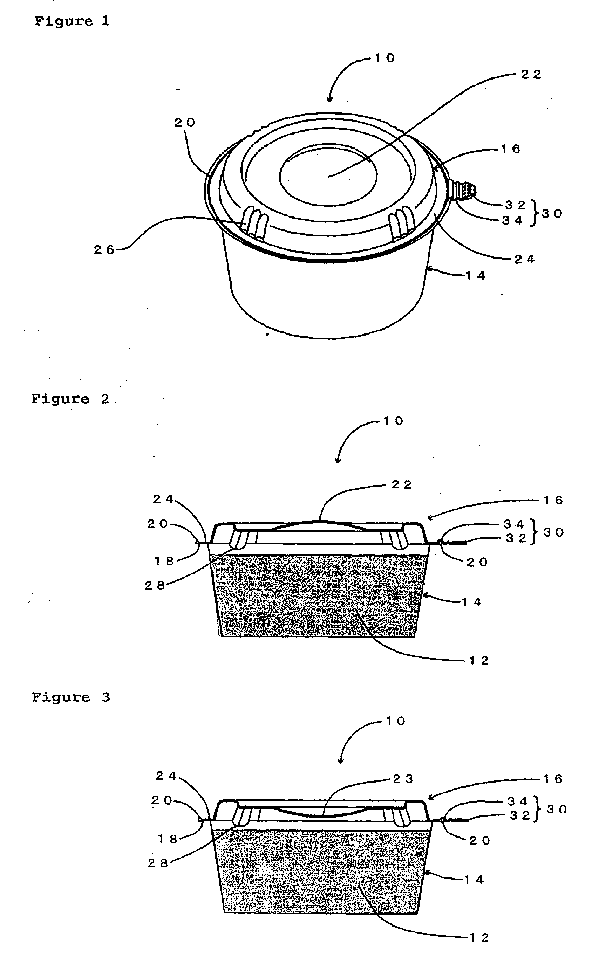

Hereinafter, a food in a container as manufactured by the present invention is explained concretely with reference to the figures. Fig. 1 is a perspective view of a food in a container of one embodiment manufactured by the method of the present invention. Fig. 2 is a longitudinal sectional view of a food in a container shown in Fig. 1. Fig. 3 is a longitudinal sectional view showing a state when a portion adapted to form a concave portion of a food in a container shown in Fig. 1 has formed a concave portion.

As it is shown in Fig. 1 to Fig. 3, a food in a container 10 comprises a container body 14, baked confectionery 12 stored in the container body 14, and a lid member for sealing 16 which closes the container body 14 from the upper side.

The container body 14 is composed of a circular aluminum whose diameter is around 8 cm and depth is around 3 cm by a plan view; has a heat-resistant property; and the inner surface thereof is coated with a heat-resistant resin. Moreover, the container body 14 has a flange portion 18 whose width is around 5 mm at the upper end thereof and the flange portion 18 comprises a convex-shaped edge portion 20.

The lid member for sealing 16 is a dome-shaped lid member which is composed of polystyrene which is a thermoplastic resin of circle whose diameter is around 8 cm and height is around 7 mm by a plan view, and enables heat-sealing with the container body 14. In the center of the lid member for sealing 16, a circle convex portion (portion adapted to form a concave portion) 22 whose diameter is around 3 cm by a plan view, which is a portion having a flexibility compared to the other portions (easy to modify) and being able to form a convex portion, is formed. As it is shown in Fig.3, this convex portion 22 can form a concave portion 23 by pressing from the upper side, and consequently deformation of the lid member during manufacturing can be prevented, and peeling of the heat-sealing portion can be avoided.

Furthermore, a flange portion 24 corresponding to a flange portion 18 of the container body 14 is provided at the lower end portion of the lid member for sealing 16, and the upper surface of the flange portion 18 of the container body 14 is heat-sealed with the lower surface of the flange portion 24 of the lid member for sealing 16. Moreover, a bellows portion 26 is formed at the side portion of the lid member for sealing 16 with being spaced at a given interval and the bellows portion 26 has a projecting member 28 projected downward which enters into the container body 14. This bellows portion 26 is engaged when the lid member for sealing 16 is overlaid during the manufacture step, enabling to decide the position of the lid member for sealing 16. Moreover, the side portion of the projecting member 28 abuts with the inner wall of the container body 14 to limit the movement of the lid member for sealing 16 in the horizontal direction. Furthermore, the lid member for sealing 16 comprises a tab 30 and the tab 30 has a nonslip means 32 at the apical portion and a bellows portion 34 at the base. The bellows portion 34 is engaged with an edge portion 20 of the container body 14. By providing this bellows portion 34 enables the tab 30 to have flexibility, and breakage of the tab 30 and peeling of the seal caused by contacts and the like can be prevented.

## Claims

1. A method for manufacturing a food in a container using a food container (10) comprised of: an aluminium container body (14) wherein the inner surface is coated with a heat-resistant resin; and a dome-shaped lid member (16) for sealing made from a thermoplastic resin to close the container body, wherein a method for manufacturing a food in a container comprises the following steps: a filling step to fill foodstuff (12) in the container body; a heating step to heat a filled foodstuff together with the container body; a sealing step to heat-seal the lid member for sealing to the container body after being heated; and a cooling step to cool the sealed container.

2. The method for manufacturing a food in a container according to claim 1, wherein the lid member (16) for sealing of the food container (10) has a portion (22) adapted to form a concave portion which can form a concave portion (23).

3. The method for manufacturing a food in a container according to claim 2, wherein the portion (22) adapted to form a concave portion is a convex portion.

4. The method for manufacturing a food in a container according to claim 2 or 3, wherein the portion (22) adapted form a concave portion is placed in the center part of the lid member (16) for sealing.

5. The method for manufacturing a food in a container according to any one of claims 2 to 4, wherein the method for manufacturing comprises a pressing step to form a concave portion (23) by pressing the portion (22) adapted to form a concave portion after the sealing step.

6. The method for manufacturing a food in a container according to any one of claims 1 to 5, wherein the sealing step comprises a preheating step and a complete sealing step.

7. A food container (10) for the manufacture of a food in accordance with the method of any preceding claim, the food container comprising:
an aluminium container body (14) having an inner surface coated with a heat-resistant resin; and
a dome-shaped lid member (16) for sealing the food container,
wherein the dome-shaped lid member comprises a thermoplastic resin.

8. The food container according to claim 7 and a foodstuff (12) contained in the container.

## Patentansprüche

1. Verfahren zur Herstellung eines Lebensmittels in einem Behälter, wobei ein Lebensmittelbehälter (10) verwendet wird mit: einem Aluminiumbehälterkörper (14), wobei die innere Oberfläche mit einem hitzebeständigen Harz beschichtet ist,
und einem kalottenförmigen Deckelelement (16) zum Verschließen, hergestellt aus einem thermoplastischen Harz, um den Behälterkörper zu verschließen, wobei ein Verfahren zur Herstellung eines Lebensmittels in einem Behälter verwendet wird mit den folgenden Schritten: einem Befüllschritt, um Nahrungsmittel in den Behälterkörper zu füllen, einem Erwärmungsschritt, um ein eingefülltes Nahrungsmittel zusammen mit dem Behälterkörper zu erwärmen, einem Verschließschritt, um das Deckelelement, nachdem es erhitzt wurde, zum Verschließen mit dem Containerkörper zu verschweißen und einem Kühlschritt, um den verschlossenen Behälter zu kühlen.

2. Verfahren zum Herstellen eines Lebensmittels in einem Behälter nach Anspruch 1, wobei das Deckelelement (16) zum Verschließen des Lebensmittelbehälters (10) einen Teil (22) aufweist, der so ausgestaltet ist, daß er einen konkaven Teil bildet, der ein konkaves Teil (23) bilden kann.

3. Verfahren zum Herstellen eines Lebensmittels in einem Behälter nach Anspruch 2, wobei der Teil (22), der so ausgestaltet ist, daß er einen konkaven Teil bildet, ein konvexer Teil ist.

4. Verfahren zum Herstellen eines Lebensmittels in einem Behälter nach Anspruch 2 oder 3, wobei der Teil (22), der so ausgestaltet ist, daß er einen konkaven Teil bildet, in dem mittleren Teil des Deckelelements (16) zum Verschließen angeordnet ist.

5. Verfahren zum Herstellen eines Lebensmittels in einem Behälter nach einem der Ansprüche 2 bis 4, wobei das Verfahren zur Herstellung einen Andrückschritt aufweist, um einen konkaven Teil (23) durch Drücken des Teils (22) zu bilden, der so ausgestaltet ist, daß er nach dem Verschließschritt einen konkaven Teil zu bildet.

6. Verfahren zum Herstellen eines Lebensmittels in einem Behälter nach einem der Ansprüche 1 bis 5, wobei der Verschließschritt einen Vorerwärmungsschritt und einen vollständigen Verschließschritt aufweist.

7. Lebensmittelbehälter (10) für die Herstellung eines Lebensmittels gemäß dem Verfahren nach einem vorhergehenden Anspruch, wobei der Lebensmittelbehälter aufweist:
einen Aluminiumbehälterkörper (14), der eine mit einem wärmebeständigen Harz beschichtete innere Oberfläche aufweist und
ein kalottenförmiges Deckelelement (16) zum Verschließen des Lebensmittelbehälters, wobei das kalottenförmige Deckelelement ein thermoplastisches Harz aufweist.

8. Lebensmittelbehälter nach Anspruch 7 und ein Nahrungsmittel (12), das in dem Behälter enthalten ist.

## Revendications

1. Procédé pour fabriquer un aliment dans un récipient en utilisant un récipient alimentaire (10) composé d'un corps de récipient (14) en aluminium, dans lequel la surface interne est revêtue d'une résine résistant à la chaleur ; et d'un élément de couvercle en forme de dôme (16) pour étanchement, fait en une résine thermoplastique pour fermer le corps de récipient, le procédé pour fabriquer un aliment dans un récipient comprenant les étapes suivantes : une étape de remplissage pour remplir le corps de récipient de matière alimentaire (12) ; une étape de chauffage pour chauffer l'aliment se trouvant dans le corps de récipient conjointement au corps de récipient ; une étape d'étanchement pour thermosouder l'élément de couvercle afin de le souder au corps de récipient après chauffage ; et une étape de refroidissement pour refroidir le récipient étanché.

2. Procédé pour fabriquer un aliment dans un récipient selon la revendication 1, dans lequel l'élément couvercle (16) pour étancher le récipient alimentaire (10) comporte une partie (22) apte à former une partie concave qui peut former une partie concave (23).

3. Procédé pour fabriquer un aliment dans un récipient selon la revendication 2, dans lequel la partie (22) apte à former une partie concave est une partie convexe.

4. Procédé pour fabriquer un aliment dans un récipient selon la revendication 2 ou 3, dans lequel la partie (22) apte à former une partie concave est placée dans la partie centrale de l'élément de couvercle (16) pour étanchement.

5. Procédé pour fabriquer un aliment dans un récipient selon l'une quelconque des revendications 2 à 4, le procédé de fabrication comprenant une étape de pression pour former une partie concave (23) en pressant la partie (22) apte à former une partie concave après l'étape d'étanchement.

6. Procédé pour fabriquer un aliment dans un récipient selon l'une quelconque des revendications 1 à 5, dans lequel l'étape d'étanchement comprend une étape de préchauffage et une étape d'étanchement complet.

7. Récipient alimentaire (10) pour la fabrication d'un aliment suivant le procédé selon l'une quelconque des revendications précédentes, le récipient alimentaire comprenant :
un corps de récipient (14) en aluminium comportant une surface interne revêtue d'une résine résistant à la chaleur ; et
un élément de couvercle en forme de dôme (16) pour étancher le récipient alimentaire, l'élément de couvercle en forme de dôme comprenant une résine thermoplastique.

8. Récipient alimentaire selon la revendication 7 et un aliment (12) contenu dans le récipient.
